## Europäisches Patentamt
## European Patent Office
## Office européen des brevets

(19)

(11) Publication number: **0 068 410**
A1

(12)

# EUROPEAN PATENT APPLICATION

(21) Application number: 82105464.0

(22) Date of filing: 22.06.82

(51) Int. Cl.³: **B 60 R 13/08**

(30) Priority: 26.06.81 JP 95558/81

(43) Date of publication of application: 05.01.83
Bulletin 83/1

(84) Designated Contracting States: DE FR GB IT

(71) Applicant: NISSAN MOTOR COMPANY, LIMITED, No.2, Takara-cho, Kanagawa-ku, Yokohama City (JP)

(72) Inventor: Fukushima, Masao, No. 3-21-76, Harumi-cho, Fuchu Tokyo (JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 43, D-8000 München 22 (DE)

(54) Noise reduction device of automotive vehicle.

(57) A noise reduction device for an automotive vehicle (14), comprises an under-cover (10) fixedly disposed directly under an engine (12) supported by a vehicle body (14a), each under-cover (10) including a plurality of louver boards (24) each of which is inclined downwardly in the direction toward a vehicle front (F), thereby making engine noise harmless while improving heat-release of the engine.

# NOISE REDUCTION DEVICE OF AUTOMOTIVE VEHICLE

## BACKGROUND OF THE INVENTION

### 1.    Field of the Invention

This invention relates to an improvement in a noise reduction device for an automotive vehicle, and more particularly to an engine under-cover for making engine noise harmless.

### 2.    Description of the Prior Art

In connection with noise reduction of automotive vehicles, an under-cover is installed right under an engine so as to prevent engine noise from emitting outside of the vehicle.  Such a conventional under-cover is usually formed of a flat plate member and securely connected to side-members of a vehicle body. However, this unavoidably decreases air flow amount supplied through a part under the engine, thereby deteriorating heat-release of the engine, which might cause engine overheat.

## SUMMARY OF THE INVENTION

In accordance with the present invention, a noise reduction device for an automotive vehicle comprises an under-cover which is fixedly disposed under an engine. The under-cover includes a plurality of louver boards each of which is inclined downwardly in the direction toward a vehicle front so that an opening is defined between the neighbouring louver boards. Therefore, engine noise emission is directed toward ambient air forward of the vehicle front to make it harmless, while improving heat-release of the engine.

BRIEF DESCRIPTION OF THE DRAWINGS

The features and advantages of the noise reduction device of the present invention will be more clearly appreciated from the following description taken in conjunction with the accompanying drawings in which like reference numerals designate like parts and elements, and in which:

Fig. 1 is a schematic side view of an automotive vehicle provided with a conventional under-cover;

Fig. 2 is a sectional view taken in the direction of arrows substantially along the line II-II of Fig. 2;

Fig. 3 is a perspective view of the conventional under-cover of Fig. 1;

Fig. 4 is a schematic side view of an automotive vehicle provided with another conventional under-cover;

Fig. 5 is a schematic side view of an automotive vehicle provided with a preferred embodiment of a noise reduction device or under-cover in accordance with the present invention;

Fig. 6 is a front view of the under-cover of Fig. 5;

Fig. 7 is a side view of the under-cover of Fig. 5;

Fig. 8 is a perspective view of the under-cover of Fig. 5;

Fig. 9 is a graph showing the measured data of automotive vehicle noise;

Fig. 10 is a graph showing the measured data of engine oil temperature and engine coolant temperature of automotive vehicles; and

Fig. 11 is a perspective view of another embodiment of the under-cover of the present invention.

DETAILED DESCRIPTION OF THE INVENTION

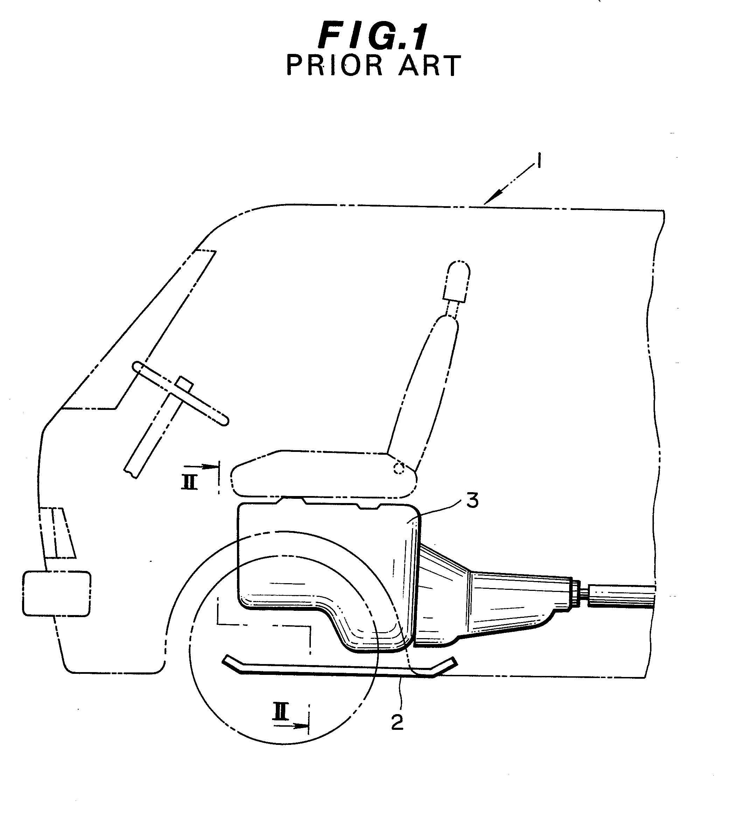

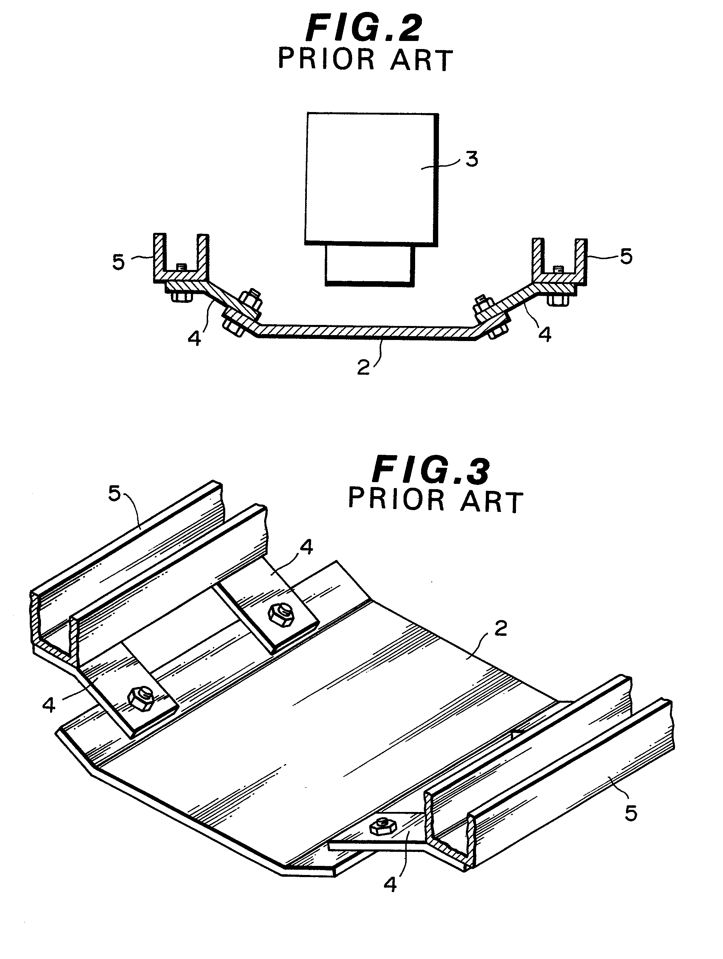

To facilitate understanding the present invention, a brief reference will be made to an example of conventional under-covers for noise reduction, depicted in Figs. 1 and 3. Referring to Figs. 1 to 3, an automotive vehicle 1 is provided with an under-cover 2 which is generally flat and of the shape of a plate. The under-cover 2 is located generally horizontally and right under an engine 2 mounted on a vehicle body. The under-cover 2 is fastened to side-members 5 through brackets 4 attached opposite side ends of the under-cover 2, which side-members 5 constitute part of the vehicle body. Thus, the under-cover functions to prevent engine noise from emitting outside of the vehicle.

However, such an under-cover is so arranged as

0068410

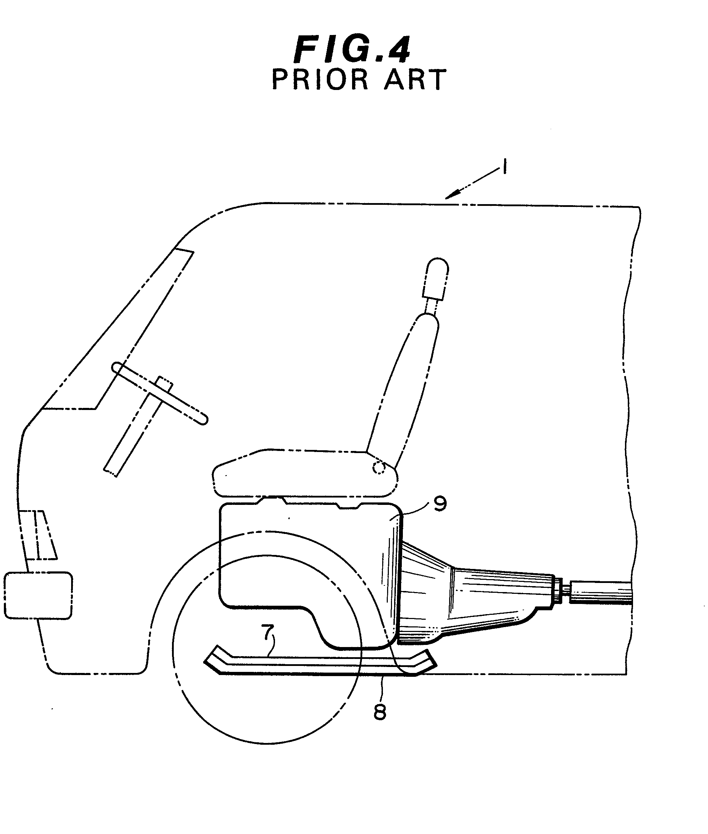

to envelope the engine 3 from the engine downward direction as much as possible in order to improve noise insulation effect, and therefore the amount of air flowing through a part right under the engine is decreased owing to the plate-type flat under-cover 2. This deteriorates heat radiation from the engine 3, thereby causing engine overheat. Apart from the above, Fig. 4 shows another example conventional under-cover. In this example, a sound-absorbing material 7 is securely attached on the upper surface of an under-cover 8 which upper surface faces to an engine 9. Even with the thus arranged under-cover 8 provided with the sound-absorbing material 7, oil dropped from the engine 3 adheres onto the sound-absorbing material 7 and therefore there is a possibility of causing vehicle fire.

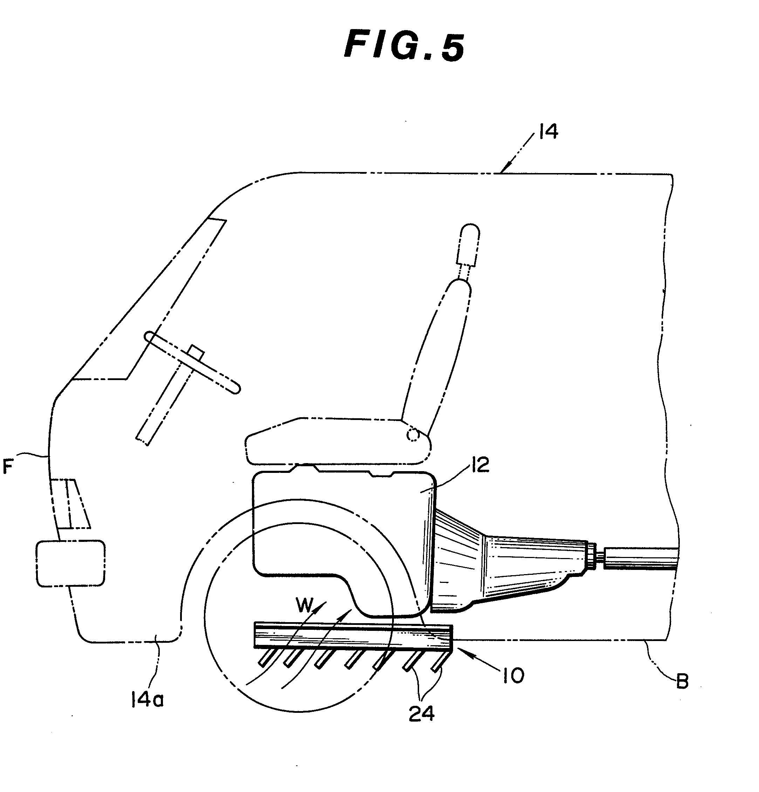

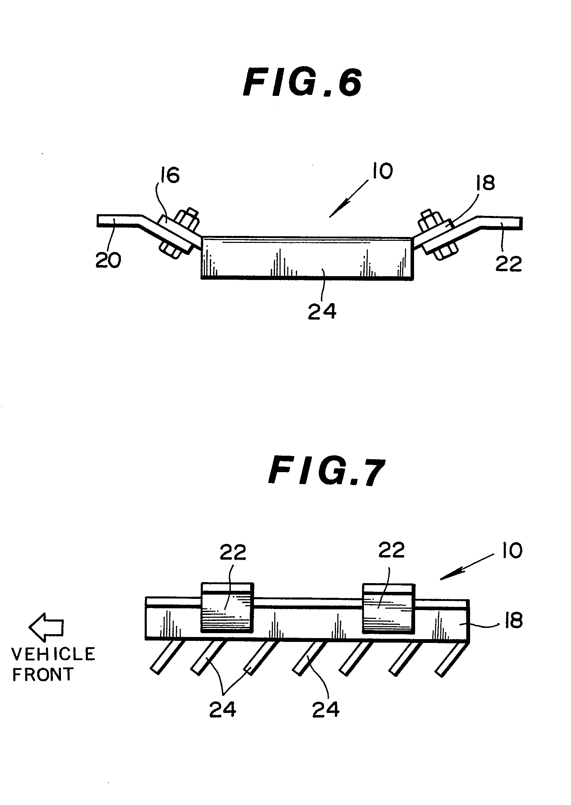

In view of the above description of the conventional under-covers, reference is now made to Figs. 5 to 11, and more specifically to Figs. 5 to 8, wherein a preferred embodiment of a noise reduction device or under-cover of the present invention is illustrated by the reference numeral 10. The under-cover 10 is located directly under an internal combustion engine 12 mounted on a vehicle body 14a of an automotive vehicle 14. The under-cover 10 is disposed generally horizontal, i.e., parallel with the ground (not shown) on which the automotive

-4-

vehicle 14 runs. The under-cover 10 includes two support plate members 16, 18 which are located parallel with each other and extend in the fore-and-aft direction or along the length of the vehicle body 14a. These support plate members 16, 18 are provided respectively with brackets 20, 22 which are fastened respectively with two side-members (not shown) forming part of the vehicle body 14a.

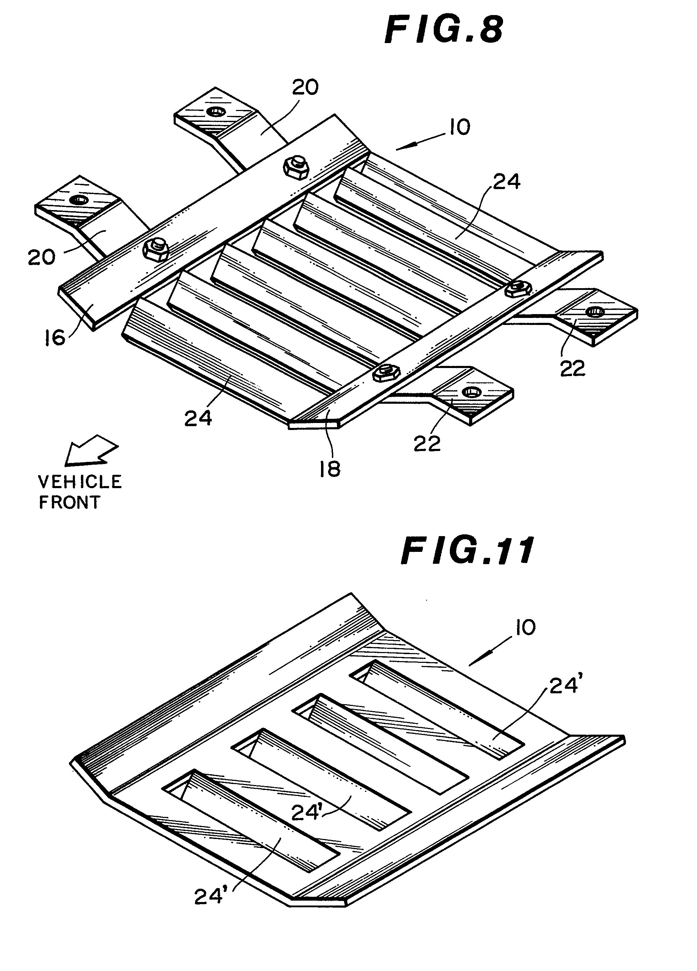

A plurality of louver boards 24 are securely supported between the two support plate members 16, 18. Each louver board 24 is of the flat rectangular plate-type and elongates in the direction of the width of the vehicle body 14a or perpendicularly to the support plate members 16, 18 as viewed from the direction of the engine 12. Each louver board 24 is inclined downwardly in the direction toward a vehicle front F or the front section of the vehicle body 14a so that the louver boards 24 are parallel with each other. As shown in Fig. 8, each louver board 24 is formed with two opposite end edges (no numerals) of which respective upper portions are securely connected to the respective opposite side edges of the two support plate members 16, 18. Additionally, as seen from the Figures, the louver boards 24 are disposed at equal suitable intervals so that a suitable space is defined between the neighboring louver boards 24.

The operation of the thus arranged under-cover 10 will be discussed hereinafter.

In the automotive vehicle 14 provided with the under-cover 10, the noise generated from the engine 12 reaches the maximal level during engine acceleration. In general, such engine noise is emitted outside of the vehicle 14 through a space between the vehicle body 14a and the ground between front and rear wheels of the vehicle 14. Accordingly, pedestrians and the like feel the thus emitted engine noise in the maximum level when the vehicle 14 passes by the pedestrians and the like. However, according to the present invention, the majority of noise generated from the engine 12 strikes against the surfaces of the respective downwardly inclined louver boards 24 so that its propagation or radiation direction is changed along the inclined surface of each louver board 24. Then, the engine noise is emitted or radiated with directivity toward the ground in front of the vehicle 14. It will be understood that such forward noise emission does not exert any baneful influence upon social environment; because, the engine noise is radiated toward the front of the vehicle and therefore the thus radiated noise hardly reach the pedestrians and the like even when the vehicle 14 passes by them. Thus, the noise from the engine 12 can be effectively made harmless. Besides, if engine oil drops and adheres onto the louver boards 24, the engine oil can easily drop onto the ground by virtue the inclination of the louver boards 24 of the under-cover 10, thereby omitting the possibility of vehicle fire due to engine oil burning. Furthermore, during vehicle cruising, air stream indicated by arrows W in Fig. 5 is supplied inside of the under-cover 10 through each space formed between the neighbouring louver boards 24, so as to cool the engine 12, thus effectively preventing engine overheat.

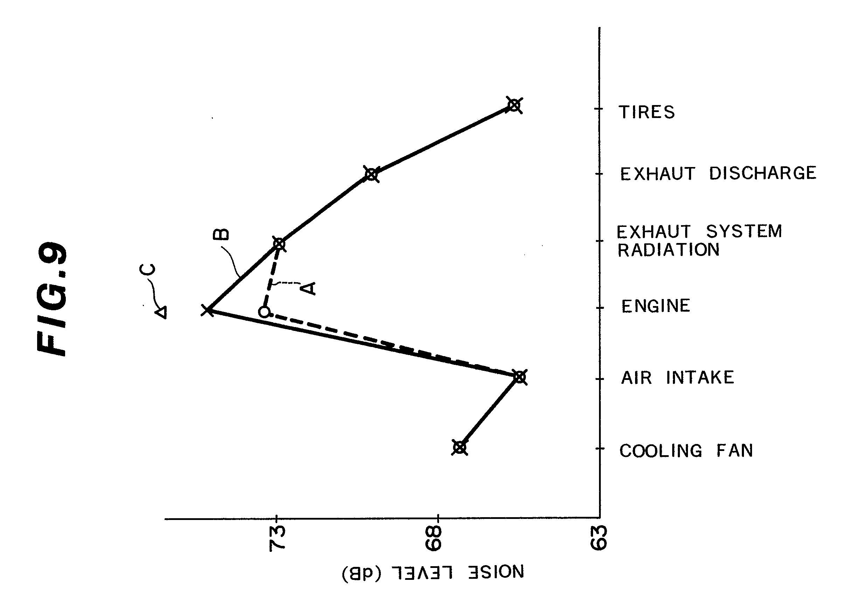

Fig. 9 shows a noise reduction effect of the under-cover 10 shown in Figs. 5 to 8 in comparison with the conventional under-cover shown in Figs. 1 to 3. In Fig. 9, a dotted curve A indicates noise levels from various sections in the vehicle 14 provided with the under-cover 10 shown in Figs. 5 to 8, while a solid curve B indicates those in the vehicle 1 provided with the conventional under-cover 2 shown in Figs. 1 to 3. For the purpose of comparison, a triangle C indicates the noise level from an engine of an automotive vehicle which is not provided with any under-cover for engine noise insulation. It is to be noted that the same vehicle was used in experiments to obtain the data of curves A and B, and the triangle C. The graph of Fig. 9 demonstrates the fact that the under-cover of the present invention is considerably excellent in engine noise reduction effect as compared with the conventional under-cover which is, in turn, effective as compared with the case without the under-cover.

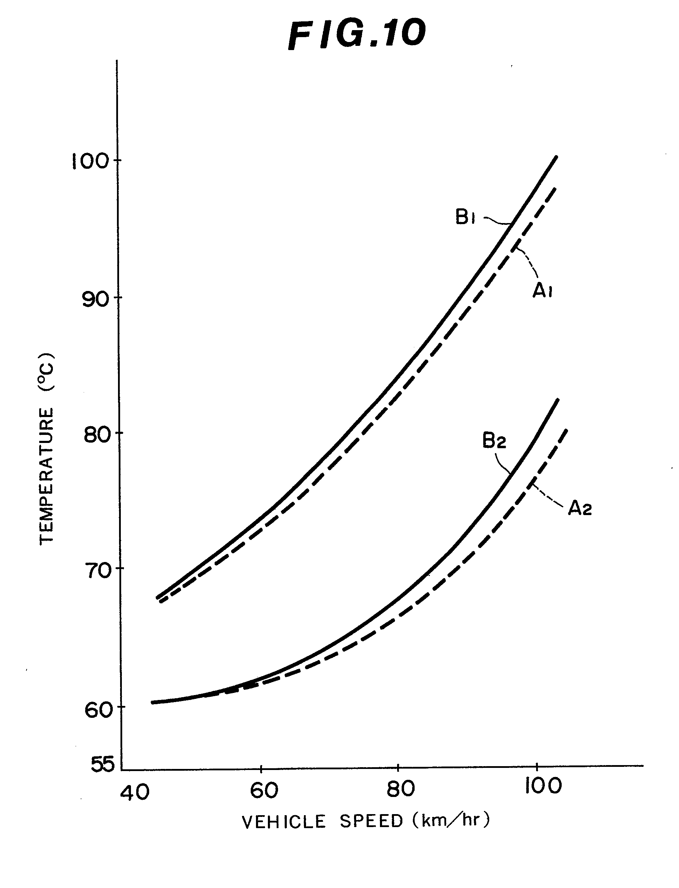

Fig. 10 shows the comparison in heat-release preventing effect between the under-cover of the present inention and the conventional under-cover. In Fig. 10, two dotted curves $A_1$ and $A_2$ indicate engine oil temperature within an oil pan and coolant temperature at the inlet of a radiator, respectively, of the engine of the vehicle provided with the under-cover shown in Figs. 5 to 8; while two solid curves $B_1$ and $B_2$ indicate those, respectively, of the engine of the vehicle provided with the conventional under-cover 2 shown in Figs. 1 to 3. It is to be noted that the same vehicle having the same engine was used in the experiments to obtain the data of the four curves in Fig. 10. The graph of Fig. 10 exhibits the fact that both the engine oil temperature and engine coolant temperature in case using the under-cover of the present invention are lower than in the case using the conventional under-cover. It will be appreciated from this, that the under-cover of the present invention is less in heat-release preventing effect and therefore excellent in an effect for causing engine heat to release outside of the vehicle.

Fig. 11 illustrates another embodiment of the present invention, in which the under-cover 10 is formed of a piece of integral panel. In this embodiment, a plurality of cuts in the form of the counterpart ( [ ) of square brackets are formed in the integral panel, and thereafter sections surrounded by respective cuts are bent downwardly to form a plurality of louver boards 24' as shown in Fig. 11. Each louver board 24' is inclined downwardly in the direction toward the vehicle front, and extends in the direction of the width of the vehicle body 14a. It will be understood that such an under-cover 24' can be made merely by modifying a conventional under-cover as shown in Fig. 3, without production cost increase and weight increase.

As appreciated from the above, according to the present invention, the under-cover is formed with a plurality of louver boards each of which is inclined downwardly in the direction toward the vehicle front. Therefore, noise generated in the engine can be certainly made harmless, and the heat-release of the engine can be improved, while omitting the possibility of causing vehicle fire.

WHAT IS CLAIMED IS:

1.  A noise reduction device of an automotive vehicle (14) having an engine (12) and a vehicle body (14a), said noise reduction device comprising:

an under-cover (10) fixedly disposed under said engine and including a plurality of louver boards (24), each louver board (24) being inclined downwardly in the direction toward the front section (F) of the vehicle body (14a).
(Figs. 5-8, 11)

2.  A noise reduction device as claimed in Claim 1, wherein each louver board (24) elongates in the direction of the width of the vehicle body (14a).
(Figs. 5-8, 11)

3.  A noise reduction device as claimed in Claim 2, wherein said under-cover (10) includes first and second parallelly elongated support members (16,18) for supporting said louver boards (24), each support member extending in the direction of the length of the vehicle body, the opposite ends of each louver board (24) being securely connected to said first and second support members (16,18), respectively.
(Fig. 5-8)

4. A noise reduction device as claimed in Claim 3, wherein said under-cover (10) includes first and second brackets (20,22) fastened to said first and second support members, respectively, and securely connected to the vehicle body (14a).
(Fig. 5-8)

5. A noise reduction device as claimed in Claim 2, wherein said under-cover (10) includes an integral panel member in which said louver boards (24') are formed, each louver board being formed by making a cut generally in the form of a counterpart of brackets in said integral panel member, and subsequently bending downwardly a part, of said panel member, inside said cut.
(Fig. 11)

# FIG.1
## PRIOR ART

0068410

# FIG.2
## PRIOR ART

# FIG.3
## PRIOR ART

# FIG.4
## PRIOR ART

# FIG.5

## FIG.6

## FIG.7

VEHICLE
FRONT

0068410

# FIG.8

VEHICLE
FRONT

# FIG.11

# FIG.9

# FIG.10

European Patent
Office

**EUROPEAN SEARCH REPORT**

0068410

Application number

EP 82 10 5464.0

| Category | Citation of document with indication, where appropriate, of relevant passages | Relevant to claim |
|---|---|---|
| A | <u>DE - A1 - 2 422 390</u> (M.A.N.) <br> * fig. 2 * <br> -- | |
| A | <u>GB - A - 2 047 182</u> (CATERPILLAR MITSUBISHI) <br> * fig. 7 * <br> -- | |
| A | <u>US - A - 3 762 489</u> (F.D. PROKSCH et al.) <br> * fig. 6 * <br> ---- | |

## DOCUMENTS CONSIDERED TO BE RELEVANT

**CLASSIFICATION OF THE APPLICATION (Int. Cl. 3)**

B 60 R 13/08

**TECHNICAL FIELDS SEARCHED (Int.Cl. 3)**

B 60 R 13/08

F 02 B 77/13

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 20-09-1982 | BECKER |

EPO Form 1503.1  06.78